# EUROPÄISCHE PATENTSCHRIFT

(11) **EP 2 195 617 B1**
(45) Veröffentlichungstag und Bekanntmachung des Hinweises auf die Patenterteilung: **18.09.2019**
(21) Anmeldenummer: 08839082.8
(22) Anmeldetag: 08.10.2008
(51) Int. Cl.: G01D 21/00

(54) **KABELSCHALTUNG MIT DIGITALER SIGNALAUFBEREITUNG**
CABLE CIRCUIT WITH DIGITAL SIGNAL PROCESSING
CIRCUIT DE CÂBLE À CONDITIONNEMENT DE SIGNAUX NUMÉRIQUE

(30) Priorität: 10.10.2007 DE 102007048812
(43) Veröffentlichungstag der Anmeldung: 16.06.2010
(73) Patentinhaber: Endress + Hauser Conducta GmbH+Co. KG, 70839 Gerlingen (DE)
(72) Erfinder: BUSCHNAKOWSKI, Stephan, 09127 Chemnitz (DE); PECHSTEIN, Torsten, 01445 Radebeul (DE); ROBL, Stefan, 70839 Gerlingen (DE); SCHEIBE, Sven-Matthias, 01129 Dresden (DE); MIETH, Tobias, 01097 Dresden (DE)
(74) Vertreter: Andres, Angelika Maria
(86) Internationale Anmeldenummer: PCT/EP2008/063471
(87) Internationale Veröffentlichungsnummer: WO 2009/050087

(56) Entgegenhaltungen:
- EP-A- 1 600 736
- WO-A-02/054013
- WO-A-03/096139
- WO-A-2005/031339
- DE-A1- 10 313 639

## Beschreibung

Die Erfindung betrifft eine Kabelschaltung gemäß dem Oberbegriff des Anspruchs 1 sowie ein System zur Messdatenübertragung.

In der Prozessautomatisierungstechnik wird eine Vielzahl von verschiedenen Sensoren zur Erfassung von Prozessvariablen eingesetzt. Beispiele für derartige Sensoren sind pH-Sensoren, Gassensoren, Durchflusssensoren, Masseflusssensoren, etc. In modernen Industrieanlagen werden derartige Sensoren oft unter widrigen Umgebungsbedingungen betrieben, beispielsweise sind die Sensoren korrosiven Chemikalien, Hitze, Vibrationen etc. ausgesetzt.

Zum Anschluss dieser Sensoren an ein übergeordnetes Messsystem hat es sich bewährt, die Sensoren über eine kontaktlose Schnittstelle mit einer Kabelschaltung zu koppeln, welche über ein Kabel mit einem Messumformer verbunden ist. Bei der kontaktlosen Schnittstelle kann es sich beispielsweise um eine optische Schnittstelle, eine kapazitive Schnittstelle oder um eine induktive Schnittstelle handeln. Durch Verwenden einer kontaktlosen Schnittstelle werden verschleißanfällige elektrische Kontakte vermieden. Da ein derartiges Sensormodul keine Öffnungen für elektrische Kontakte aufweist, ist die Oberfläche des Sensormoduls hermetisch dicht. Das Oberflächenmaterial des Sensormoduls umschließt das Sensormodul vollständig und kann an den jeweiligen Einsatzzweck bzw. an das jeweilige korrosive Medium angepasst werden.

Die deutsche Patentanmeldung 102 18 606 A1 beschreibt einen potentiometrischen Sensor. Ein potentiometrischer Sensor, insbesondere pH-Sensor oder Redoxsensor, umfasst einen Elementarsensor zum Erfassen einer potentiometrischen Größe, insbesondere eines pH-Wertes oder eines Redox-Potentials; und eine Schnittstelle zur Ausgabe eines von der potentiometrischen Größe abhängigen Signals an eine übergeordnete Einheit, insbesondere einen Transmitter. Dabei weist der potentiometrische Sensor einen digitalen Datenspeicher auf, der fest mit dem Elementarsensor verbunden ist.

In der deutschen Patentanmeldung DE 103 13 639 A1 ist ein elektrochemischer Gassensor beschrieben. Das Gassensormodul umfasst einen Elementarsensor zum Erfassen einer Gaskonzentration; einen digitalen Datenspeicher zur Speicherung von Sensordaten oder Prozessdaten und eine kontaktlose Schnittstelle zum Anschluss an eine übergeordnete Einheit zur Energieversorgung des Gassensormoduls und zum Datenaustausch zwischen dem Gassensormodul und der übergeordneten Einheit.

Die WO 03/096139 A2 offenbart ein Verbindungskabel zum Austausch von Daten zwischen einem ersten Gerät und einem zweiten Gerät und zur Übertragung von Energie von dem ersten Gerät zum zweiten Gerät. Das Verbindungskabel umfasst eine erste Schnittstelle zum lösbaren Anschluss an das erste Gerät, eine zweite Schnittstelle zum lösbaren Anschluss an das zweite Gerät, und eine Verbindungsleitung zur Übertragung von Daten und Energie zwischen der ersten und der zweiten Schnittstelle, wobei die erste und die zweite Schnittstelle so beschaffen sind, dass der Austausch von Daten zwischen dem ersten Gerät und der ersten Schnittstelle sowie dem zweiten Gerät und der zweiten Schnittstelle ohne galvanische Kopplung erfolgt, und die Übertragung von Energie von dem ersten Gerät zur ersten Schnittstelle und von der zweiten Schnittstelle zum zweiten Gerät induktiv erfolgt. Der Datenaustausch erfolgt ebenfalls induktiv durch Modulation des Wechselspannungssignals zur Energieübertragung.

Die Erfindung ist definiert durch die Ansprüche 1 und 14.

Vorteilhafte Weiterentwicklungen der Erfindung sind in den Unteransprüchen angegeben.

Die vorliegende Erfindung betrifft eine Kabelschaltung, welche über eine induktive Schnittstelle mit einem Sensormodul gekoppelt ist. Über ein Kabel ist die Kabelschaltung mit einem Messumformer verbunden. Zur Verbesserung der Signalübertragung in der Kabelschaltung wird eine Signalverarbeitungseinheit, beispielsweise ein Mikrokontroller, in den Signalübertragungspfad integriert. Die Signalverarbeitungseinheit ist für die Signalaufbereitung der Daten zuständig, die zwischen Messumformer und Sensormodul in beiden Richtungen übertragen werden.

Daten, die vom Messumformer über das Kabel zur Kabelschaltung gesendet werden, werden von der Signalverarbeitungseinheit empfangen und ausgewertet. Anschließend sendet die Signalverarbeitungseinheit diese Daten über die kontaktlose Schnittstelle zum Sensormodul.

In der umgekehrten Übertragungsrichtung empfängt die Kabelschaltung über die kontaktlose Schnittstelle Daten vom Sensormodul. Diese Daten werden von der Signalverarbeitungseinheit empfangen, aufbereitet und über die Kabelschnittstelle zum Messumformer gesendet.

Die in den Signalpfad eingeschleifte Signalverarbeitungseinheit wirkt in beiden Übertragungsrichtungen als Repeater. Durch das Empfangen und erneute Senden der Daten wird die Qualität der übertragenen Signale verbessert. Insbesondere werden verschliffene Flanken aufgebessert, und das Timing der empfangenen Signale wird korrigiert. Die qualitative Verbesserung der Signale in der Kabelschaltung führt zu einer verbesserten Übertragungsqualität für den Datenaustausch zwischen dem Sensormodul und dem Messumformer. Durch Einsatz der erfindungsgemäßen Lösung kann die Zahl der Übertragungsfehler verringert werden.

Neben der Verbesserung der Übertragungsqualität bietet die Integration des Signalprozessors in den Signalpfad noch weitere Vorteile. Entsprechend einer bevorzugten Ausführungsform kann über die Signalverarbeitungseinheit eine Indexstruktur bereitgestellt werden, welche eine Adressierung von spezifischen Parametern der Kabelschaltung ermöglicht. Dadurch kann vom Messumformer aus auf spezifische Parameter der Kabelschaltung zugegriffen werden. Insbesondere kann der Messumformer mit Hilfe der Indexstruktur Informationen zu Typ, Hersteller, Seriennummer und Softwareversion der Kabelschaltung von der Kabelschaltung abfragen. Vom Messumformer aus können Parameter der Kabelschaltung und des Sensormoduls separat adressiert werden.

Die Integration der Signalverarbeitungseinheit in den Signalpfad der Kabelschaltung bietet darüber hinaus weitere Vorteile. Entsprechend einer bevorzugten Ausführungsform kann ein Informationsaustausch zwischen der Kabelschaltung und dem Sensormodul stattfinden, bei dem sich die beiden Einheiten gegenseitig über die jeweils unterstützen Funktionalitäten informieren.

Die Kabelschaltung prägt den vom Messumformer zum Sensormodul übermittelten Telegrammen eigene Informationen auf, um auf diese Weise einen Kommunikationskanal zum Sensormodul zu eröffnen. Auch das Sensormodul kann den zum Messumformer übermittelten Telegrammen Informationen für die Kabelschaltung aufprägen. Vorzugsweise werden unbenutzte Bits der Telegramme für den Informationsaustausch zwischen Kabelschaltung und Sensormodul verwendet.

Über diesen Informationsaustausch kann die Kabelschaltung eine Anfrage zum Sensormodul übertragen, welche Funktionen vom Sensormodul unterstützt werden. Als Antwort darauf kann das Sensormodul einem zum Messumformer übermittelten Telegramm Informationen darüber aufprägen, welche Funktionen es unterstützt. Auf diese Weise bekommt die Kabelschaltung Kenntnis von den Fähigkeiten des Sensormoduls.

Entsprechend einer bevorzugten Ausführungsform der Erfindung wird auf Seiten der Kabelschaltung entschieden, ob für die Datenübertragung über die kontaktlose Schnittstelle auf ein alternatives Kodierungsverfahren umgeschaltet werden soll. Mit Hilfe der in den Signalpfad integrierten Signalverarbeitungseinheit kann ein vorteilhaftes Kodierungsverfahren für die Datenübertragung über die kontaktlose Schnittstelle ausgehandelt werden.

Bei einer bevorzugten Ausführungsform wird für die Übertragung über die kontaktlose Schnittstelle ein alternatives Kodierungsverfahren zu dem im Stand der Technik häufig verwendeten Kodierungsverfahrens "Non-Return-to-Zero" (NRZ) verwendet. Gemäß einer bevorzugten Ausführungsform kann beispielsweise das 8B10B-Kodierungsverfahren oder die Manchester-Kodierung für die Datenübertragung über die kontaktlose Schnittstelle eingesetzt werden. Dadurch wird die Qualität der Datenübertragung über die kontaktlose Schnittstelle verbessert.

Nachfolgend ist die Erfindung anhand von mehreren in der Zeichnung dargestellten Ausführungsbeispielen näher erläutert.

Es zeigen:
Fig. 1 den Datenaustausch zwischen dem Messumformer, der Kabelschaltung und dem Sensormodul;
Fig. 2 ein Blockschaltbild einer Kabelschaltung gemäß dem Stand der Technik;
Fig. 3 eine Ausführungsform von Kabelschaltung und Sensormodul;
Fig. 4 ein Blockschaltbild der erfindungsgemäßen Kabelschaltung;
Fig. 5 eine Kennlinie eines Klasse-E-Verstärkers; und
Fig. 6 einen Datenaustausch zwischen der Kabelschaltung und dem Sensormodul zum Aushandeln eines alternativen Kodierungsverfahrens.

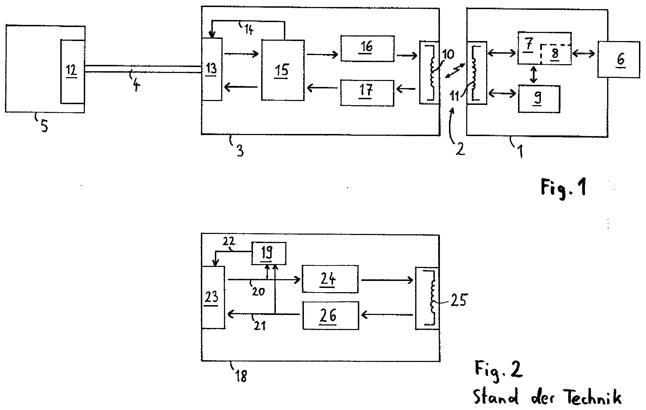

In Fig. 1 ist ein erfindungsgemäßes System zum Erfassen und Weiterleiten von Messwerten dargestellt. Das System umfasst ein Sensormodul 1, das über eine kontaktlose Schnittstelle 2 mit einer Kabelschaltung 3 kommuniziert. Der Begriff "kontaktlos" soll dabei bezeichnen, dass die sensorseitige Schnittstelle von der transmitterseitigen Schnittstelle elektrisch bzw. galvanisch isoliert ist. Die kontaktlose Schnittstelle 2 ist als induktive Schnittstelle ausgeführt, wobei in Fig. 1 eine induktive Schnittstelle dargestellt ist. Um die erfassten Daten an ein übergeordnetes System weiterleiten zu können, ist die Kabelschaltung 3 über ein Kabel 4 mit einem Messumformer 5 verbunden. Der Messumformer 5 kann seinerseits an einen Feldbus angekoppelt sein.

Das Sensormodul 1 umfasst einen Elementarsensor 6. Bei dem Elementarsensor 6 kann es sich beispielsweise um einen Durchflusssensor, einen Massenflusssensor, einen pH-Sensor, einen Gassensor oder um irgendeinen anderen Sensor handeln. Weiter umfasst das Sensormodul 1 einen Mikroprozessor 7, welcher vorzugsweise mit einem integrierten Analog-Digital-Wandler (ADC) 8 ausgestattet ist, um die vom Elementarsensor 6 erfassten analogen Messwerte in entsprechende Digitalwerte umwandeln zu können. Vorzugsweise umfasst das Sensormodul 1 darüber hinaus einen digitalen Datenspeicher 9, in dem Sensordaten oder Prozessdaten abgelegt werden können. Vorzugsweise sind in dem digitalen Datenspeicher 9 auch Kalibrationsdaten für den jeweiligen Elementarsensor 6 gespeichert, mit deren Hilfe die vom Elementarsensor 6 gelieferten Analogsignale in entsprechende physikalische Messwerte umgewandelt werden können. Die für den Elementarsensor 6 ermittelten Kalibrationswerte können so innerhalb des Sensormoduls 1 abgelegt werden, so dass eine feste Zuordnung der Kalibrationsdaten zu dem Elementarsensor 6 ermöglicht wird. Da jedes Sensormodul 1 seine eigenen Kalibrationsdaten mit sich trägt, werden Verwechslungen zwischen verschiedenen Sätzen von Kalibrationsdaten verhindert.

Bei der in Fig. 1 gezeigten Ausführungsform ist die kontaktlose Schnittstelle 2 als induktive Schnittstelle ausgebildet. Die induktive Schnittstelle umfasst eine auf Seiten der Kabelschaltung 3 angeordnete Primärspule 10 sowie eine auf Seiten des Sensormoduls 1 angeordnete Sekundärspule 11. Wenn das Sensormodul mittels einer Steckverbinderkupplung auf die Kabelschaltung 3 aufgesteckt wird, werden die Primärspule 10 und die Sekundärspule 11 in eine definierte räumliche Position zueinander gebracht, so dass Hochfrequenzsignale in beiden Richtungen zwischen der Kabelschaltung 3 und dem Sensormodul 1 übertragen werden können. Dadurch wird ein Datenaustausch zwischen Kabelschaltung 3 und Sensormodul 1 ermöglicht. Darüber hinaus kann auch die Energieversorgung des Sensormoduls 1 über die induktive Schnittstelle erfolgen. Dazu wird das von der Kabelschaltung 3 erzeugte Hochfrequenzsignal durch die Sekundärspule 11 des Sensormoduls 1 empfangen und gleichgerichtet, um so eine Betriebsspannung für den Mikroprozessor 7, den digitalen Datenspeicher 9 und eventuell auch für den Elementarsensor 6 zu erzeugen.

Zusätzlich zu der kontaktlosen Schnittstelle 2 weist die Kabelschaltung 3 eine Schnittstelle zum Kabel 4 auf, über die der Datenaustausch mit dem Messumformer 5 abgewickelt wird. Bei der in Fig. 1 gezeigten Ausführungsform erfolgt die Datenübertragung zwischen Messumformer 5 und Kabelschaltung 3 entsprechend dem Standard EIA485. Zur Umwandlung der zu übertragenden Signale in den Standard EIA485 umfasst der Messumformer 5 einen EIA485-Schnittstellenwandler 12, und auch die Kabelschaltung 3 ist mit einem EIA485-Schnittstellenwandler 13 ausgestattet.

Die gesamte Kommunikation zwischen dem Messumformer 5, der Kabelschaltung 3 und dem Sensormodul 1 erfolgt im Halbduplexbetrieb. Dies bedeutet, dass Daten entweder vom Messumformer 5 über die Kabelschaltung 3 zum Sensormodul 1 oder aber in umgekehrter Richtung vom Sensormodul 1 über die Kabelschaltung 3 zum Messumformer 5 übertragen werden. Ein gleichzeitiges Senden und Empfangen von Daten ist im Halbduplexbetrieb nicht möglich. Die jeweilige Übertragungsrichtung wird dabei durch ein Richtungssignal 14 vorgegeben, das durch einen auf der Kabelschaltung 3 angeordneten Mikrokontroller 15 erzeugt wird. Der Mikrokontroller 15 schaltet die Richtung der Datenübertragung jeweils dann um, wenn die Übertragung eines sogenannten "Telegramms" abgeschlossen ist.

Zunächst ist die Datenübertragungsrichtung so eingestellt, dass Daten vom Messumformer 5 zum Sensormodul 1 übertragen werden können. Das zu übertragende Telegramm wird durch den Schnittstellenwandler 12 kodiert und über das Kabel 4 zur Kabelschaltung 3 übertragen. Die empfangenen Daten werden durch den Schnittstellenwandler 13 dekodiert und dem Rx-Eingang des Mikrokontrollers 15 zugeführt.

Im Unterschied zum Stand der Technik ist der Mikrokontroller 15 bei der erfindungsgemäßen Kabelschaltung 3 in den Signalpfad integriert. Der Mikrokontroller 15 empfängt das am Rx-Eingang anliegende Signal, bereitet es auf und sendet das Signal zum Modulator 16. Insofern wirkt der in den Signalpfad eingeschleifte Mikrokontroller 15 als Repeater. Das aufbereitete Signal gelangt zum Modulator 16, der ein Hochfrequenzsignal zur Übertragung über die induktive Schnittstelle entsprechend den zu übertragenden Daten moduliert. Das modulierte Hochfrequenzsignal wird von der Primärspule 10 zur Sekundärspule 11 übertragen und kann dann auf Seiten des Sensormoduls 1 durch den Prozessor 7 ausgewertet werden.

Der Mikrokontroller 15 erkennt, wann die Übertragung des Telegramms vom Messumformer 5 zum Sensormodul 1 beendet ist, und schaltet dann die Übertragungsrichtung um. Jetzt können Daten in umgekehrter Richtung vom Sensormodul 1 über die Kabelschaltung 3 zum Messumformer 5 übertragen werden. Auf Seiten des Sensormoduls 1 wird das zu übertragende Telegramm durch den Mikroprozessor 7 auf ein Hochfrequenzsignal aufmoduliert. Das modulierte Hochfrequenzsignal wird über die Sekundärspule 11 zur Primärspule 10 übertragen und gelangt von dort zum Demodulator 17. Der Demodulator 17 extrahiert die aufmodulierten Daten aus dem Hochfrequenzsignal und leitet diese Daten an den in den Signalpfad integrierten Mikrokontroller 15 weiter. Der Mikrokontroller 15 bereitet die vom Demodulator 17 erhaltenen Daten auf und sendet diese Daten über seinen Tx-Ausgang zum EIA485-Schnittstellenwandler 13. Insofern wirkt der in den Signalpfad eingeschleifte Mikrokontroller 15 auch in Rückübertragungsrichtung als Repeater für die vom Sensormodul 1 empfangenen Daten. Diese Daten werden anschließend durch den EIA485-Schnittstellenwandler 13 in den Standard EIA485 umgewandelt und über das Kabel 4 zum Messumformer 5 übertragen. Dort werden die Daten durch den EIA485-Schnittstellenwandler 12 dekodiert.

Zum besseren Verständnis der Erfindung ist in Fig. 2 eine Kabelschaltung 18 gemäß dem Stand der Technik gezeigt. Bei dieser Kabelschaltung 18 ist der Mikrokontroller 19 nicht in den Signalpfad eingeschleift. Der in Fig. 2 gezeigte Mikrokontroller 19 ist lediglich dafür zuständig, den Datenverkehr auf den Signalleitungen 20, 21 zu beobachten und in Abhängigkeit davon ein Richtungssignal 22 zur Umschaltung der Übertragungsrichtung zu erzeugen. Bei der Kabelschaltung 18 des Stands der Technik gelangen die vom EIA485-Schnittstellenwandler 23 empfangenen Signale ohne weitere Signalaufbereitung zum Modulator 24. Der Modulator 24 erzeugt ein entsprechend diesen Daten moduliertes Hochfrequenzsignal, welches dann über die Primärspule 25 zu einem Sensormodul übertragen wird. Entlang des Signalpfads verschlechtert sich die Qualität des zu übertragenden Signals, das Timing wird verschliffen, und die Flautensteilheit geht teilweise verloren. Dadurch kann es zu Übertragungsfehlern kommen.

Entsprechendes gilt auch für die Signalübertragung in umgekehrter Richtung. Das von der Primärspule 25 empfangene modulierte Hochfrequenzsignal wird dem Demodulator 26 zugeführt, und das demodulierte Signal gelangt ohne weitere Signalaufbereitung direkt zum EIA485-Schnittstellenwandler 23. Auch hier kommt es zu einer Verschlechterung der Signalqualität entlang des Übertragungspfads, wobei das Timing teilweise verloren geht und die Signalflanken verschliffen werden.

Durch Vergleich der in Fig. 1 gezeigten erfindungsgemäßen Lösung mit der in Fig. 2 gezeigten Lösung des Stands der Technik ist erkennbar, dass durch Einschleifen des Mikrokontrollers 15 in den Signalpfad eine Repeater-Funktion implementiert werden kann. Die Realisierung dieser Repeater-Funktion erfordert keinen zusätzlichen Bauteileaufwand. Der Mikrokontroller 15 wird in den Datenverkehr bzw. -transfer einbezogen und erzeugt die empfangenen Signale jeweils neu. Dadurch werden die empfangenen Daten hinsichtlich Timing und Flankensteilheit aufbereitet. Einer Verschlechterung der Signalqualität entlang des Übertragungspfads wird aktiv entgegengewirkt. Der Mikrokontroller beseitigt in beiden Richtungen der Datenkommunikation mögliche Fehler, die durch verschliffene Flanken oder Timing-Probleme verursacht werden. Somit empfangen Messumformer und Sensormodul Signale von verbesserter Qualität, und infolge der verbesserten Signalqualität wird die Häufigkeit von Übertragungsfehlern verringert.

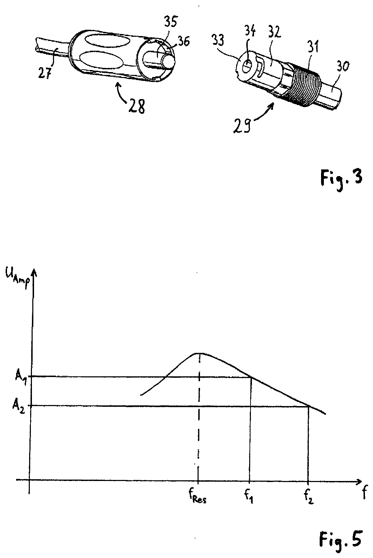

In Fig. 3 ist eine Ausführungsform einer am Ende eines Kabels 27 angeordneten Kabelschaltung 28 dargestellt. Außerdem ist ein Sensormodul 29 gezeigt, das über eine Steckverbinderkupplung mit der Kabelschaltung 28 verbunden werden kann, so dass über die induktive Schnittstelle eine Daten- und Energieübertragung erfolgen kann. Das Sensormodul 29 umfasst einen Elementarsensor 30 zur Erfassung von Messwerten. Das Gehäuse des Sensormoduls 29 weist ein Gewinde 31 auf, um das Sensormodul 29 in einer Armatur montieren zu können. An dem vom Elementarsensor 30 abgewandten Ende des Sensormoduls 29 ist ein zylindrischer Endabschnitt 32 vorgesehen, in dem eine Sekundärspule 33 einer induktiven Schnittstelle angeordnet ist. In der Mantelfläche des zylindrischen Endabschnitts 32 befinden sich Aussparungen eines Bajonettverschlusses.

Der zylindrische Endabschnitt 32 des Sensormoduls 29 weist eine stirnseitige Aussparung 34 auf, welche als Aufnahme für eine an das Gehäuse der Kabelschaltung 28 angeformte zylinderförmige Nase 35 dient. Innerhalb der zylinderförmigen Nase 35 befindet sich ein Ferritkern mit der Primärspule der induktiven Schnittstelle. Beim Aufstecken der Kabelschaltung 28 auf das Sensormodul 29 wird die innerhalb der Nase 35 angeordnete Primärspule in eine definierte räumliche Position relativ zur Sekundärspule gebracht, so dass eine Daten- und Energieübertragung zwischen der Kabelschaltung 28 und dem Sensormodul 29 stattfinden kann. Das Gehäuse der Kabelschaltung 28 weist an seiner Stirnseite eine hülsenartige Mantelfläche 36 auf, die axial vorsteht und die Nase 35 koaxial umgibt. Beim Aufstecken der Kabelschaltung 28 auf das Sensormodul 29 umschließt die hülsenartige Mantelfläche 36 zumindest einen Teil des zylindrischen Endabschnitts 32 des Sensormoduls 29. Radial einwärts verlaufende Vorsprünge auf der hülsenartigen Mantelfläche 36 befinden sich dann mit den Aussparungen des Bajonettverschlusses in Eingriff und sichern die Steckverbinderkupplung.

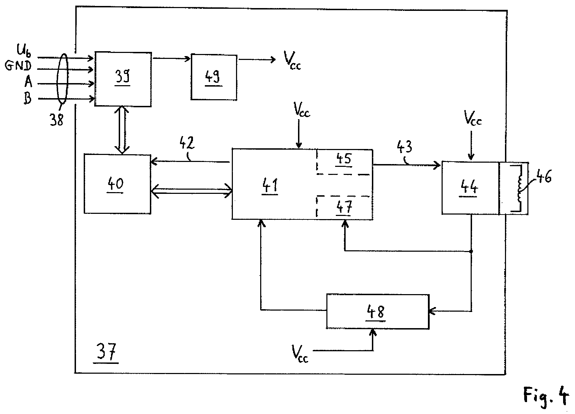

Fig. 4 zeigt ein Blockschaltbild einer erfindungsgemäßen Kabelschaltung 37. Die Kabelschaltung 37 ist über ein Kabel 38 mit einem Messumformer verbunden. Das Kabel 38 umfasst eine Spannungsversorgung U_{b}, eine Masse GND sowie zwei Signalleitungen A und B, über die Daten im Halbduplexbetrieb zum Messumformer übertragen bzw. vom Messumformer empfangen werden können. Die Signalleitungen A und B sind über einen Filter 39 mit einer EIA485-Schnittstelle 40 verbunden. Das Kabel 38 kann bis zu mehrere hundert Meter lang sein. Insofern kann es auf der Übertragungsstrecke zwischen Messumformer und Kabelschaltung zur Einkopplung von elektromagnetischen Störungen kommen. Der Filter 39 hat die Aufgabe, diese elektromagnetischen Störungen wegzufiltern, bevor die empfangenen Daten zur EIA485-Schnittstelle 40 geleitet und dort dekodiert werden.

Die dekodierten Daten werden dem Rx-Eingang des Mikrokontrollers 41 zugeführt. Der Mikrokontroller 41 ist sowohl in den Hin- als auch in den Rückübertragungspfad integriert. Außerdem erzeugt der Mikrokontroller 41 ein Richtungssignal 42, welches die Datenübertragungsrichtung festlegt.

Der Mikrokontroller 41 wandelt die von der EIA485-Schnittstelle 40 erhaltenen Daten in ein Ansteuersignal 43 für einen Klasse-E-Verstärker 44 um. Bei der in Fig. 4 gezeigten Ausführungsform erzeugt der Mikrokontroller 41 das Ansteuersignal 43 mit Hilfe eines in Software realisierten Modulators 45. Es ist daher nicht erforderlich, einen separaten, in Hardware realisierten Modulator zur Erzeugung des Ansteuersignals 43 zur Verfügung zu stellen. Stattdessen wird das Ansteuersignal 43 durch eine im Mikrokontroller 41 abgelegte Signalverarbeitungsroutine erzeugt.

Der Klasse-E-Verstärker 44 hat die Aufgabe, das Hochfrequenzsignal zur Übertragung über die induktive Schnittstelle zu erzeugen. Mittels des Ansteuersignals 43 werden auf dieses Hochfrequenzsignal die zu übertragenden Daten aufmoduliert. Das modulierte Hochfrequenzsignal wird der Primärspule 46 der induktiven Schnittstelle zugeführt und über die induktive Schnittstelle zum Sensormodul übertragen.

Zur Modulation des Hochfrequenzsignals gibt es verschiedene Möglichkeiten. Eine erste Möglichkeit ist, dem Klasse-E-Verstärker 44 ein hochfrequentes Ansteuersignal 43 zuzuführen, wobei die zu übertragenden Daten dem Ansteuersignal 43 in Form einer Frequenzumtastung aufgeprägt werden. Dieses Modulationsverfahren ist in Fig. 5 veranschaulicht. Fig. 5 stellt die Amplitude des vom Klasse-E-Verstärker 44 erzeugten Hochfrequenzsignals als Funktion der Frequenz des Ansteuersignals 43 dar. Die Maximalamplitude wird dann erreicht, wenn die Frequenz des Ansteuersignals 43 in etwa der Resonanzfrequenz f_{Res} des Klasse-E-Verstärkers 43 entspricht. Diese Resonanzfrequenz kann beispielsweise bei 230 kHz liegen. Wenn das Ansteuersignal 43 die Frequenz f₁ hat, wird ein Hochfrequenzsignal der Amplitude A₁ erzeugt. Wenn die Frequenz des Ansteuersignals 43 die Frequenz f₂ hat, dann verringert sich die Amplitude des vom Klasse-E-Verstärker 44 erzeugten Hochfrequenzsignals auf den Wert A₂. Durch Umtasten der Frequenz des Ansteuersignals 43 kann dem vom Klasse-E-Verstärker 44 erzeugten Hochfrequenzsignal eine Amplitudenmodulation aufgeprägt werden, um auf diese Weise Daten zum Sensormodul zu übertragen.

Bei einer bevorzugten Ausführungsform umfasst der Mikrokontroller 41 einen Analog-Digital-Wandler 47, der die Amplitude des vom Klasse-E-Verstärker 44 erzeugten Hochfrequenzsignals überwacht und ggf. die Frequenz des hochfrequenten Ansteuersignals 43 so nachregelt, dass die Amplitude des Hochfrequenzsignals konstant gehalten wird. Indem im Mikrokontroller 41 eine Regelschleife zur Nachregelung der Signalamplitude vorgesehen wird, kann sich die Kabelschaltung 37 an unterschiedliche Sensormodule mit unterschiedlicher Energieaufnahme anpassen.

Alternativ zu der soeben beschriebenen Frequenzumtastung könnten andere Modulationsverfahren verwendet werden, um dem Hochfrequenzsignal eine Amplitudenmodulation aufzuprägen. Beispielsweise könnte eine Lastmodulation des vom Klasse-E-Verstärker 44 erzeugten Hochfrequenzsignals durchgeführt werden. Bei diesem Modulationsverfahren stellt der Mikrokontroller 41 ein niederfrequentes Ansteuersignal zur Verfügung, wobei entsprechend diesem Ansteuersignal eine Last am Ausgang des Klasse-E-Verstärkers 43 geschaltet wird. Durch diese Lastmodulation wird das vom Klasse-E-Verstärker 44 erzeugte Hochfrequenzsignal einer Amplitudenmodulation unterworfen. Auf diese Weise können auch mit Hilfe eines niederfrequenten Ansteuersignals 43 die zu übertragenden Daten auf das Hochfrequenzsignal aufmoduliert werden.

In Rückübertragungsrichtung empfängt die Kabelschaltung 37 über die Primärspule 46 ein von dem Sensormodul ausgesendetes Hochfrequenzsignal. Das empfangene Hochfrequenzsignal gelangt zu einem Demodulator 48, der das empfangene Signal demoduliert und die so erhaltenen Daten dem Mikrokontroller 41 zur Verfügung stellt. Bei dem Demodulator 48 kann es sich beispielsweise um einen Hüllkurvengleichrichter handeln, der eine differentielle Auswertung der Hüllkurve des Hochfrequenzsignals durchführt. Im Mikrokontroller 41 werden die vom Demodulator 48 erhaltenen Daten aufbereitet und über den Tx-Ausgang des Mikrokontrollers 41 zur EIA485-Schnittstelle 40 gesendet, woraufhin sie über das Kabel 38 zum Messumformer geleitet werden. Insofern wirkt der Mikrokontroller 41 auch in Rückübertragungsrichtung als Repeater, der das vom Demodulator 48 erhaltene Signal aufbereitet und neu sendet.

Bei der in Fig. 4 gezeigten Ausführungsform erfolgt die Spannungsversorgung der Kabelschaltung 37 vom Messumformer aus über das Kabel 38. Insbesondere wird die Versorgungsspannung U_{b} vom Messumformer zur Verfügung gestellt. Dabei kann das Kabel 38 zwischen Messumformer und Kabelschaltung 37 bis zu mehrere hundert Meter lang sein. Entlang dieser Strecke kommt es zu einem Spannungsabfall von ungefähr 150 mV pro 100 m Kabel. Aus diesem Grund ist die an der Kabelschaltung 37 anliegende Spannung U_{b} gewissen Schwankungen unterworfen. Um eine stabilisierte Versorgungsspannung V_{CC} zur Verfügung stellen zu können, umfasst die Kabelschaltung 37 einen Spannungswandler 49, der die vom Messumformer bereitgestellte Spannung U_{b} in eine definierte Betriebsspannung V_{CC} umwandelt. Es ist von Vorteil, als Spannungswandler 49 ein Schaltnetzteil zu verwenden, da Schaltnetzteile einen sehr guten Wirkungsgrad von 90% und mehr aufweisen. Die stabilisierte Versorgungsspannung V_{CC} wird dem Mikrokontroller 41, dem Klasse-E-Verstärker 44 sowie dem Demodulator 48 zugeführt. Insbesondere für den Demodulator 48 ist eine stabilisierte Versorgungsspannung wichtig, um Fehler beim Dekodieren der von der induktiven Schnittstelle empfangenen Signale zu vermeiden. Durch Verwendung einer stabilisierten Versorgungsspannung kann das amplitudenmodulierte Hochfrequenzsignal mit höherer Genauigkeit erzeugt werden. Insgesamt wird durch Verwenden einer stabilisierten Versorgungsspannung die Gefahr von Übertragungsfehlern bei der Datenübertragung über die induktive Schnittstelle verringert.

Zusätzlich zu den bereits beschriebenen Vorteilen, die hauptsächlich die Verbesserung der Signalqualität betreffen, ermöglicht das Einschleifen des Mikrokontrollers 41 in den Signalpfad eine Nutzung von verschiedenen Funktionalitäten, die von dem programmierbaren Mikrokontroller 41 zur Verfügung gestellt werden. Diese neuartigen Funktionalitäten sollen im Folgenden beschrieben werden.

Die Integration des Mikrokontrollers 41 in den Signalpfad der Kabelschaltung 37 ermöglicht die Bereitstellung einer Indexstruktur, mit der spezifische Parameter der Kabelschaltung 37 vom Messumformer aus abgefragt werden können. Bei den Lösungen des Stands der Technik konnte der Messumformer lediglich auf Parameter des Sensormoduls zugreifen; eine gezielte Abfrage von Parametern der Kabelelektronik war nicht möglich. Bei der erfindungsgemäßen Lösung hingegen kann der in den Signalpfad integrierte Mikrokontroller 41 die spezifischen Parameter der Kabelschaltung 37 mit Hilfe einer separaten, vom Sensormodul völlig unabhängigen Indexstruktur verwalten. Dadurch wird die Kabelschaltung für den Messumformer als separat adressierbare Funktionseinheit wahrnehmbar. Dies eröffnet insbesondere die Möglichkeit, vom Messumformer aus die Parameter der Kabelschaltung 37 einerseits und die Parameter des Sensormoduls andererseits mit Hilfe von separaten Indexstrukturen zu adressieren und auf die beiden Funktionseinheiten separat zuzugreifen. Beispielsweise könnte der Messumformer unter Slot 0x01 auf die Parameter des Sensormoduls und unter Slot 0xF1 auf die Parameter der Kabelschaltung zugreifen.

Als spezifische Parameter der Kabelschaltung 37 können ein oder mehrere der folgenden abgefragt werden: der Typ, die Kennung oder die Seriennummer der Kabelschaltung, Herstellerangaben zur Kabelschaltung, oder Informationen zur Version der auf der Kabelschaltung implementierten Software. Derartige Angaben werden häufig unter dem Begriff "Common Equipment Record" (CER) zusammengefasst.

Des weiteren kann die Kabelschaltung mit einem Temperaturfühler ausgestattet sein, wobei über die Indexstruktur auf die jeweils gemessene Temperatur der Kabelschaltung zugegriffen werden kann. Entsprechend einer weiteren bevorzugten Ausführungsform erfasst der auf der Kabelschaltung befindliche Mikrokontroller die Betriebsstunden mit Hilfe eines Betriebsstundenzählers, wobei der aktuelle Zählerstand mit Hilfe der Indexstruktur ausgelesen werden kann. Entsprechend einer weiteren bevorzugten Ausführungsform wird alternativ oder zusätzlich die Zahl der Betriebsstunden erfasst, während denen eine vorgegebene Temperatur überschritten worden ist.

Mit Hilfe der Indexstruktur können all diese Parameter vom Messumformer aus abgefragt und anschließend auf einer Leitwarte oder einem PC dargestellt werden. Auf diese Weise wird dem Benutzer ein Überblick über die vorhandenen Systemkomponenten sowie über den aktuellen Status des Systems gegeben. Außerdem kann der Betriebszustand der Kabelschaltung vom Messumformer aus überwacht werden.

Ein in den Signalpfad der Kabelschaltung geschalteter Mikrokontroller bietet darüber hinaus den Vorteil, dass über den Mikrokontroller eine neue Art des Datenaustauschs zwischen Kabelschaltung und Sensormodul ermöglicht wird. Dabei kann der Mikrokontroller die vom Sensormodul unterstützten Funktionalitäten und Kodierungsverfahren abfragen. Dieser Datenaustausch wird im folgenden näher beschrieben.

Bei dem in Fig. 1 dargestellten Übertragungssystem ist der Messumformer 5 als Master konfiguriert, während die Kabelschaltung 3 und das Sensormodul 1 im Slave-Modus betrieben werden. Dies bedeutet, dass der Messumformer 5 die Kontrolle über den gesamten Datenverkehr zwischen Messumformer, Kabelschaltung und Sensormodul besitzt. Die Kabelschaltung kann daher nicht eigenmächtig mit dem Sensormodul kommunizieren.

Um dennoch einen von der Kabelschaltung initiierten Informationsaustausch zwischen Kabelschaltung und Sensormodul zu ermöglichen, fügt der Mikrokontroller eigene Nachrichten in die vom Messumformer zur Sensormodul übermittelten Telegramme ein. Beispielsweise kann der Mikrokontroller unbenutzte Bits der Telegramme beschreiben, um auf diese Weise Anfragen an das Sensormodul zu richten. Wenn das Sensormodul derartige fortgeschrittene Funktionalitäten unterstützt, kann es derartige Anfragen beantworten, indem es einem vom Sensormodul zum Messumformer übermittelten Telegramm eine entsprechende Antwort aufprägt. Beispielsweise kann das Sensormodul dem Mikrokontroller in dieser Antwort mitteilen, welche Kodierungsverfahren es unterstützt.

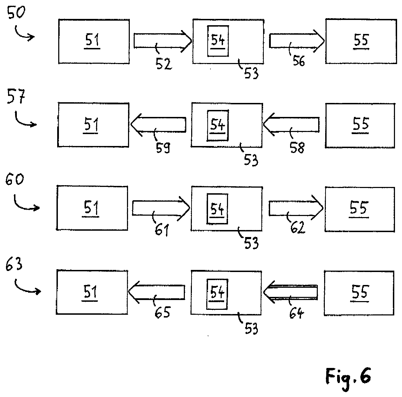

In Fig. 6 ist der Ablauf einer Kommunikation zwischen der Kabelschaltung und dem Sensormodul dargestellt. In einem ersten Schritt 50 sendet der Messumformer 51 ein Telegramm 52 zur Kabelschaltung 53. Die Kabelschaltung 53 weist einen in den Signalpfad integrierten Mikrokontroller 54 auf. Der Mikrokontroller 54 modifiziert einige unbenutzte Übertragungsbits des Telegramms 52 und prägt dem Telegramm 52 auf diese Weise eine Anfrage an das Sensormodul 55 auf. Falls das Telegramm eine Prüfsumme umfasst, modifiziert der Mikrokontroller auch diese Prüfsumme entsprechend den veränderten Übertragungsbit. Das modifizierte Telegramm 56 wird anschließend von der Kabelschaltung 53 über die kontaktlose Schnittstelle zum Sensormodul 55 übertragen. Auf diese Weise wird ein neuartiger Kommunikationskanal zwischen der Kabelschaltung 53 und dem Sensormodul 55 eröffnet. Im ersten Schritt 50 werden das Telegramm 52 sowie das modifizierte Telegramm 56 entsprechend dem Kodierungsverfahren "Non-Return-to-Zero" (NRZ) übertragen, welches standardmäßig zur Datenübertragung zwischen dem Messumformer 51, der Kabelschaltung 53 und dem Sensormodul 55 verwendet wird.

Wenn es sich bei dem Sensormodul um ein älteres Modell handelt, das die beschriebene Form der Kommunikation zwischen Kabelschaltung und Sensormodul nicht unterstützt, bleibt die mit dem modifizierten Telegramm übermittelte Anfrage unbeantwortet. Wenn das Sensormodul die erfindungsgemäße Kommunikation zwischen Kabelschaltung und Sensormodul dagegen unterstützt, dann wird die von der Kabelschaltung gesendete Anfrage erkannt und beantwortet.

Es soll angenommen werden, dass das Sensormodul 55 die beschriebene Kommunikation mit der Kabelschaltung 53 unterstützt. In einem zweiten Schritt 57 ist dargestellt, wie das Sensormodul 55 die Anfrage der Kabelschaltung 53 beantwortet. Zur Beantwortung der Anfrage prägt das Sensormodul 55 einem an den Messumformer 51 gerichteten Telegramm eine entsprechende Antwort auf. In dieser Antwort informiert das Sensormodul 55 darüber, welche Funktionalitäten es unterstützt. Beispielsweise könnte das Sensormodul 55 in dieser Antwort die Kabelschaltung 53 darüber informieren, welche anderen Kodierungsverfahren außer NRZ unterstützt werden. Um die Antwort auf die Anfrage der Kabelschaltung 53 auf das Telegramm aufzukodieren, modifiziert das Sensormodul 55 unbenutzte Übertragungsbits des Telegramms und erzeugt auf diese Weise ein mit Zusatzinformation kodiertes Telegramm 58, das zur Kabelschaltung 53 gesendet wird. Auf Seiten der Kabelschaltung wird das Telegramm 58 durch den Mikrokontroller 54 analysiert. Der Mikrokontroller 54 erfährt auf diese Weise, welche Funktionalitäten vom Sensormodul 55 unterstützt werden. Anschließend sendet der Mikrokontroller 54 ein entsprechendes Telegramm 59 zum den Messumformer 51. Dabei beeinträchtigt der zusätzliche Informationsaustausch zwischen Kabelschaltung 53 und Sensormodul 55 den Datenverkehr zwischen Messumformer 51 und Sensormodul 55 nicht. Auch im zweiten Schritt 57 erfolgt die Datenübertragung entsprechend dem Kodierungsverfahren "Non-Return-to-Zero" (NRZ), welches standardmäßig zur Datenübertragung verwendet wird.

Der Mikrokontroller 54 kennt jetzt sowohl den Funktionsumfang der Kabelschaltung 53 als auch die vom Sensormodul 55 unterstützten Funktionen. Insbesondere weiß der Mikrokontroller 54 aus der Antwort des Sensormoduls 55, welche alternativen Kodierungsverfahren abgesehen von NRZ durch das Sensormodul 55 unterstützt werden. Der Mikrokontroller 54 kann jetzt entscheiden, ob die Kommunikation zwischen der Kabelschaltung 53 und dem Sensormodul 55 auf ein anderes Kodierungsverfahren umgestellt werden soll, und welches Kodierungsverfahren für diese Kommunikation in Zukunft verwendet werden soll.

Es soll angenommen werden, dass der Mikrokontroller die Entscheidung trifft, die Kodierung der über die kontaktlose Schnittstelle übertragenen Telegramme in Zukunft mittels des Kodierungsverfahrens "8B10B" vorzunehmen, das sowohl von der Kabelschaltung 53 als auch vom Sensormodul 55 unterstützt wird. Für die Datenübertragung über die kontaktlose Schnittstelle bietet das Kodierungsverfahren 8B10B im Vergleich zu NRZ verschiedene Vorteile. Ein Vorteil ist, dass ein gemäß 8B10B kodiertes Signal einen konstanten Gleichspannungsanteil aufweist, während bei NRZ der Gleichspannungsanteil variabel ist. Deshalb kommt es bei Verwendung von NRZ bei der Datenübertragung über die kontaktlose Schnittstelle unter Umständen zu einem Ausgleich des Mittelwerts der Spannung durch Längskondensatoren, und dies kann Übertragungsfehler verursachen. Daher eignen sich Übertragungsverfahren wie 8B10B oder die Manchester-Kodierung, bei denen der Gleichspannungsanteil konstant ist, besser für eine zuverlässige Datenübertragung über die kontaktlose Schnittstelle.

In einem dritten Schritt 60 veranlasst der Mikrokontroller 54 das Sensormodul 55 zur Umstellung auf 8B10B als neues Kodierungsverfahren. Einem Telegramm 61, das die Kabelschaltung 53 vom Messumformer 51 empfängt, wird ein entsprechender Umschaltbefehl aufkodiert. Zu diesem Zweck beschreibt der Mikrokontroller 54 unbenutzte Bits des Telegramms 61. Das modifizierte Telegramm 62 wird zum Sensormodul 55 übermittelt. Es ist festzuhalten, dass auch im dritten Schritt 60 die gesamte Kommunikation noch entsprechend dem Kodierungsverfahren NRZ kodiert ist.

Auf Seiten des Sensormoduls 55 wird das von der Kabelschaltung 53 empfangene Telegramm 62 analysiert, und der in diesem Telegramm enthaltene Umschaltbefehl wird erkannt. Entsprechend diesem Umschaltbefehl wird in einem vierten Schritt 63 die Datenübertragung zwischen der Kabelschaltung 53 und dem Sensormodul 55 auf das neue Kodierungsverfahren 8B10B umgestellt. Das nächste Telegramm 64, das vom Sensormodul 55 an die Kabelschaltung 53 gesendet wird, ist bereits gemäß dem Kodierungsverfahren 8B10B kodiert. Da ab jetzt die gesamte Datenübertragung über die kontaktlose Schnittstelle gemäß dem Kodierungsverfahren 8B10B abgewickelt wird, wird die Zuverlässigkeit der Datenübertragung zwischen der Kabelschaltung 53 und dem Sensormodul 55 verbessert.

Auf Seiten der Kabelschaltung 53 wird das Telegramm 64 empfangen und durch den Mikrokontroller 54 ausgewertet. Anschließend sendet der Mikrokontroller 54 die empfangenen Daten als Telegramm 65 zum Messumformer 51 weiter. Dabei kann auf der Übertragungsstrecke zwischen der Kabelschaltung 53 und dem Messumformer 51 weiterhin das bisherige Kodierungsverfahren NRZ verwendet werden. Die Datenübertragung zwischen der Kabelschaltung 53 und dem Messumformer 51 erfolgt über ein Kabel, so dass es auf dieser Übertragungsstrecke auch bei Verwendung von NRZ als Kodierungsverfahren nicht zu Übertragungsproblemen kommt. Kritisch ist in erster Linie die Datenübertragung über die kontaktlose Schnittstelle, bei der die Verwendung eines alternativen Kodierungsverfahrens zu einer Verbesserung der Übertragungsqualität führt.

Durch Einschleifen des Mikrokontrollers 54 in den Signalpfad der Kabelschaltung 53 lässt sich flexibel ein geeignetes Kodierungsverfahren für die Datenübertragung zwischen der Kabelschaltung 53 und dem Sensormodul 55 aushandeln. Durch Verwenden eines vorteilhaften Kodierungsverfahrens wie beispielsweise 8B10B-Kodierung oder Manchester-Kodierung kann die Zuverlässigkeit der Datenübertragung über die kontaktlose Schnittstelle verbessert werden.

## Patentansprüche

1. Kabelschaltung (3) zur Verbindung eines Sensormoduls (1) mit einem Messumformer (5), welche aufweist
- eine kontaktlose Schnittstelle (2) zur Signalübertragung zwischen der Kabelschaltung (3) und dem Sensormodul (1), wobei das Sensormodul (1) von der Kabelschaltung (3) galvanisch getrennt ist, und wobei die Signalübertragung zwischen der Kabelschaltung (3) und dem Sensormodul (1) auf induktivem Weg erfolgt,
- eine Kabelschnittstelle (13) zum Anschluss eines Kabels (4), welches die Kabelschaltung (3) mit dem Messumformer (5) verbindet,
**dadurch gekennzeichnet,**
**dass** die Kabelschaltung (3) weiterhin eine Signalverarbeitungseinheit (15), einen Modulator (16) und einen Demodulator (17) aufweist, wobei die Signalverarbeitungseinheit (15) einen Mikrokontroller umfasst,
- **dass** die Signalverarbeitungseinheit (15) in den Signalpfad integriert ist,
- **dass** die Signalverarbeitungseinheit (15) dazu ausgelegt ist, über die Kabelschnittstelle (13) Signale vom Messumformer (5) zu empfangen, aufzubereiten und über den Modulator (16) und die kontaktlose Schnittstelle (2) zum Sensormodul (1) zu senden, wobei der Modulator (16) dazu ausgestaltet ist ein Hochfrequenzsignal zur Übertragung über die induktive Schnittstelle entsprechend den zu übertragenden Daten zu modulieren, und
über die kontaktlose Schnittstelle (2) und den Demodulator (17) Signale vom Sensormodul (1) zu empfangen, aufzubereiten und über die Kabelschnittstelle (13) zum Messumformer (5) zu senden, wobei der Demodulator (17) dazu ausgestaltet ist die aufmodulierten Daten aus dem Hochfrequenzsignal zu extrahieren und diese Daten an den in den Signalpfad integrierten Mikrokontroller (15) weiter zu leiten,
wobei die Signalverarbeitungseinheit (15) eigene Nachrichten in die vom Messumformer (5) zum Sensormodul (1) übermittelten Telegramme einfügt, wobei der Messumformer (5) als Master konfiguriert ist, dass das Sensormodul (1) als Slave konfiguriert ist, und dass die Kabelschaltung (3) als zum Sensormodul (1) nebengeordneter Slave konfiguriert ist, und
- **dass** die Signalverarbeitungseinheit (15) als Repeater für die Signalübertragung in beiden Übertragungsrichtungen zwischen Messumformer (5) und Sensormodul (1) zur Verbesserung der Signalqualität und Verringerung der Häufigkeit von Übertragungsfehlern fungiert.

2. Kabelschaltung nach Anspruch 1, **dadurch gekennzeichnet, dass** der Repeater die Signale hinsichtlich Timing und Flankensteilheit aufbereitet.

3. Kabelschaltung nach einem der vorhergehenden Ansprüche, **dadurch gekennzeichnet, dass** es sich bei der kontaktlosen Schnittstelle um eine induktive Schnittstelle handelt, welche ein primärseitiges Steckverbinderelement umfasst, und dass das Sensormodul ein sekundärseitiges Steckverbinderelement umfasst, wobei das primärseitige Steckverbinderelement und das sekundärseitige Steckverbinderelement über eine Steckverbinderkupplung miteinander verbindbar sind und
wobei die Signalübertragung zwischen dem primärseitigen Steckverbinderelement und dem sekundärseitigen Steckverbinderelement induktiv erfolgt, wobei das primärseitige Steckverbinderelement eine Primärspule umfasst, und wobei das sekundärseitige Steckverbinderelement eine Sekundärspule umfasst, und
wobei das Sensormodul über die induktive Schnittstelle mit Energie versorgt wird.

4. Kabelschaltung nach einem der vorhergehenden Ansprüche, **dadurch gekennzeichnet, dass** die Kabelschaltung einen Klasse-E-Verstärker umfasst, der ein Hochfrequenzsignal für die Signalübertragung zwischen der Kabelschaltung und dem Sensormodul erzeugt.

5. Kabelschaltung nach Anspruch 4, **dadurch gekennzeichnet, dass** die Signalverarbeitungseinheit ein Ansteuersignal für den Klasse-E-Verstärker liefert, wobei das vom Klasse-E-Verstärker erzeugte Hochfrequenzsignal entsprechend dem Ansteuersignal moduliert wird und wobei
das Ansteuersignal für den Klasse-E-Verstärker dazu ausgelegt ist, dem Hochfrequenzsignal die zu übertragenden Daten aufzumodulieren.

6. Kabelschaltung nach einem der vorhergehenden Ansprüche, **dadurch gekennzeichnet, dass** die Signalverarbeitungseinheit eine Indexstruktur bereitstellt, über die spezifische Parameter der Kabelschaltung vom Messumformer aus adressierbar sind.

7. Kabelschaltung nach einem der vorhergehenden Ansprüche, **dadurch gekennzeichnet, dass** die Signalverarbeitungseinheit eine Indexstruktur bereitstellt, über die vom Messumformer aus Schreib- und/oder Lesezugriffe auf spezifische Parameter der Kabelschaltung durchführbar sind.

8. Kabelschaltung nach einem der vorhergehenden Ansprüche, **dadurch gekennzeichnet, dass** die Kabelschaltung eine oder mehrere Speicherzellen umfasst, in denen spezifische Parameter der Kabelschaltung abgelegt sind, wobei die spezifischen Parameter vom Messumformer aus über eine separate Indexstruktur unabhängig vom Sensormodul adressierbar sind.

9. Kabelschaltung nach einem der vorhergehenden Ansprüche, **dadurch gekennzeichnet, dass** die Signalverarbeitungseinheit dazu ausgelegt ist, den vom Messumformer an das Sensormodul zu übertragenden Telegrammen eine Nachricht für das Sensormodul aufzuprägen, wobei die Signalverarbeitungseinheit unbenutzte Übertragungsbits des Telegramms beschreibt.

10. Kabelschaltung nach einem der vorhergehenden Ansprüche, **dadurch gekennzeichnet, dass** die Signalverarbeitungseinheit dazu ausgelegt ist, den vom Messumformer an das Sensormodul zu übertragenden Telegrammen eine der folgenden Nachrichten für das Sensormodul aufzuprägen:
- eine Anfrage, welche vorteilhaften Kodierungsverfahren durch das Sensormodul unterstützt werden,
- eine Aufforderung, von dem gegenwärtig verwendeten Kodierungsverfahren auf ein vorteilhaftes Kodierungsverfahren umzuschalten.

11. Kabelschaltung nach einem der vorhergehenden Ansprüche, **dadurch gekennzeichnet, dass** das Sensormodul dazu ausgelegt ist, den vom Sensormodul an den Messumformer zu übertragenden Telegrammen eine Nachricht für die Kabelschaltung aufzuprägen, wobei unbenutzte Bits des Telegramms beschrieben werden.

12. Kabelschaltung nach einem der vorhergehenden Ansprüche, **dadurch gekennzeichnet, dass** das Sensormodul dazu ausgelegt ist, den vom Sensormodul an den Messumformer zu übertragenden Telegrammen folgende Nachricht für die Kabelschaltung aufzuprägen:
- eine Antwort, welche vorteilhafteren Kodierungsverfahren durch das Sensormodul unterstützt werden.

13. Kabelschaltung nach einem der vorhergehenden Ansprüche, **dadurch gekennzeichnet, dass** die Signalverarbeitungseinheit dazu ausgelegt ist, spezifische Übertragungsbits der vom Sensormodul an den Messumformer übermittelten Telegramme auszuwerten, um zu ermitteln, welche vorteilhaften Kodierungsverfahren durch das Sensormodul unterstützt werden,
und für den Fall, dass sowohl die Kabelschaltung als auch das Sensormodul andere vorteilhafte Kodierungsverfahren unterstützen, die Datenübertragung zwischen Kabelschaltung und Sensormodul auf ein vorteilhaftes Kodierungsverfahren umgestellt wird, während für die Datenübertragung zwischen Messumformer und Kabelschaltung weiterhin das standardmäßig verwendete Kodierungsverfahren eingesetzt wird.

14. System zur Messdatenübertragung, welches aufweist
- eine Kabelschaltung (3) nach einem der Ansprüche 1 bis 13,
- einen Messumformer (5), welcher über ein Kabel (4) mit der Kabelschnittstelle (13) der Kabelschaltung (3) verbunden ist,
- ein Sensormodul (1), das über die kontaktlose Schnittstelle (2) Daten mit der Kabelschaltung (3) austauscht.

## Claims

1. Cable circuit (3) for the connection of a sensor module (1) with a transmitter (5), wherein said circuit has
- a non-contact interface (2) for signal transmission between the cable circuit (3) and the sensor module (1), wherein the sensor module (1) is galvanically isolated from the cable circuit (3), and wherein the signal transmission between the cable circuit (3) and the sensor module (1) takes place inductively,
- a cable interface (13) designed to connect a cable (4), wherein said cable connects the cable circuit (3) to the transmitter (5),
**characterized in that**
the cable circuit (3) further comprises a signal processing unit (15), a modulator (16) and a demodulator (17), wherein the signal processing unit (15) comprises a microcontroller,
- **in that** the signal processing unit (15) is integrated in the signal path,
- **in that** the signal processing unit (15) is designed to receive signals from the transmitter (5) via the cable interface (13), to process them and to send them to the sensor module (1) via the modulator (16) and the non-contact interface (2), wherein the modulator (16) is designed to modulate a high-frequency signal for transmission via the inductive interface according to the data to be transmitted, and to receive signals from the sensor module (1) via the non-contact interface (2) and the demodulator (17), prepare them and send them to the transmitter (5) via the cable interface (13), wherein the demodulator (17) is designed to extract the modulated data from the high-frequency signal and to forward these data to the microcontroller (15) integrated in the signal path,
wherein the signal processing unit (15) inserts own messages in the telegrams sent by the transmitter (5) to the sensor module (1),
wherein the transmitter (5) is configured as a master, the sensor module (1) being configured as a slave and the cable circuit (3) being configured as a slave arranged at the same level as the sensor module (1), and
- **in that** the signal processing unit (15) acts as a repeater for signal transmission in both transmission directions between the transmitter (5) and the sensor module (1) in order to improve the signal quality and reduce the frequency of transmission errors.

2. Cable circuit as claimed in Claim 1, **characterized in that** the repeater processes the signals with regard to timing and edge steepness.

3. Cable circuit as claimed in one of the previous claims, **characterized in that** the non-contact interface is an inductive interface, which comprises a connector element on the primary side and **in that** the sensor module comprises a connector element on the secondary side, wherein the connector element on the primary side and the connector element on the secondary side can be connected to one another via a connector coupling, and
wherein the signal transmission between the connector element on the primary side and the connector element on the secondary side is inductive, wherein the connector element on the primary side comprises a primary coil and wherein the connector element on the secondary side comprises a secondary coil, and wherein the sensor module is supplied with energy via the inductive interface.

4. Cable circuit as claimed in one of the previous claims, **characterized in that** the cable circuit comprises a class E amplifier, which generates a high-frequency signal for signal transmission between the cable circuit and the sensor module.

5. Cable circuit as claimed in Claim 4, **characterized in that** the signal processing unit delivers a control signal for the class E amplifier, wherein the high-frequency signal generated by the class E amplifier is modulated according to the control signal, and wherein the control signal for the class E amplifier is designed to modulate the data to be transmitted onto the high-frequency signal.

6. Cable circuit as claimed in one of the previous claims, **characterized in that** the signal processing unit provides an index structure by means of which specific parameters of the cable circuit can be addressed from the transmitter.

7. Cable circuit as claimed in one of the previous claims, **characterized in that** the signal processing unit provides an index structure by means of which specific parameters of the cable circuit can be write-accessed and/or read-accessed from the transmitter.

8. Cable circuit as claimed in one of the previous claims, **characterized in that** the cable circuit comprises one or more memory cells in which specific parameters of the cable circuit are stored, wherein the specific parameters can be addressed from the transmitter via a separate index structure independently of the sensor module.

9. Cable circuit as claimed in one of the previous claims, **characterized in that** the signal processing unit is designed to impose a message for the sensor module on the telegrams to be sent by the transmitter to the sensor module, wherein the signal processing unit writes unused transmission bits of the telegram.

10. Cable circuit as claimed in one of the previous claims, **characterized in that** the signal processing unit is designed to impose one of the following messages for the sensor module on the telegrams to be sent by the transmitter to the sensor module:
- a query as to which advantageous coding methods are supported by the sensor module
- a command to switch from the coding method currently used to an advantageous coding method.

11. Cable circuit as claimed in one of the previous claims, **characterized in that** the sensor module is designed to impose a message for the cable circuit on the telegrams to be transmitted from the sensor module to the transmitter, wherein unused telegram bits are written.

12. Cable circuit as claimed in one of the previous claims, **characterized in that** the sensor module is designed to impose the following message for the cable circuit on the telegrams to be transmitted from the sensor module to the transmitter:
- a response regarding the advantageous coding methods which are supported by the sensor module.

13. Cable circuit as claimed in one of the previous claims, **characterized in that** the signal processing unit is designed to evaluate specific transmission bits of the telegrams transmitted from the sensor module to the transmitter in order to determine which advantageous coding methods are supported by the sensor module, and in the event that both the cable circuit and the sensor module support other advantageous coding methods, data transmission between the cable circuit and the sensor module switches to an advantageous coding method while the coding method that is used as standard continues to be used for data transmission between the transmitter and the cable circuit.

14. Measuring data transmission system which comprises:
- a cable circuit (3) as claimed in one of the Claims 1 to 13,
- a transmitter (5), which is connected to the cable interface (13) of the cable circuit (3) via a cable (4),
- a sensor module (1), which exchanges data with the cable circuit (3) via the non-contact interface (2).

## Revendications

1. Circuit de câble (3) destiné à la connexion d'un module capteur (1) avec un transmetteur (5), lequel circuit présente
- une interface sans contact (2) pour la transmission des signaux entre le circuit de câble (3) et le module capteur (1), le module capteur (1) étant séparé galvaniquement du circuit de câble (3), et la transmission des signaux entre le circuit de câble (3) et le module capteur (1) intervenant par voie inductive,
- une interface de câble (13) destinée au raccordement d'un câble (4), lequel câble relie le circuit de câble (3) avec le transmetteur (5),
**caractérisé**
**en ce que** le circuit de câble (3) comprend en outre une unité de traitement de signal (15), un modulateur (16) et un démodulateur (17), l'unité de traitement de signal (15) comprenant un microcontrôleur,
- **en ce que** l'unité de traitement de signal (15) est intégrée dans le trajet de signal,
- **en ce que** l'unité de traitement de signal (15) est conçue de telle sorte à recevoir les signaux du transmetteur (5) via l'interface de câble (13), à les traiter et à les envoyer au module capteur (1) via le modulateur (16) et l'interface sans contact (2), le modulateur (16) étant conçu de telle sorte à moduler un signal haute fréquence pour la transmission via l'interface inductive, en fonction des données à transmettre, et à recevoir les signaux du module capteur (1) via l'interface sans contact (2) et le démodulateur (17), à les traiter et à les envoyer au transmetteur (5) via l'interface de câble (13), le démodulateur (17) étant conçu de telle sorte à extraire du signal haute fréquence les données modulées et à transmettre ces données au microcontrôleur (15) intégré dans le trajet de signal,
l'unité de traitement de signal (15) insérant certains messages dans les télégrammes transmis par le transmetteur (5) vers le module capteur (1),
le transmetteur (5) étant configuré en tant que maître, le module capteur (1) étant configuré en tant qu'esclave et le circuit de câble (3) étant configuré en tant qu'esclave de même niveau que le module capteur (1), et
- **en ce que** l'unité de traitement de signal (15) fonctionne en tant que répéteur pour la transmission des signaux dans les deux directions de transmission entre le transmetteur (5) et le module capteur (1) en vue de l'amélioration de la qualité des signaux et de la diminution de la fréquence d'erreurs de transmission.

2. Circuit de câble selon la revendication 1, **caractérisé en ce que** le répéteur traite les signaux concernant la synchronisation et la pente des fronts de signal.

3. Circuit de câble selon l'une des revendications précédentes, **caractérisé en ce que**, concernant l'interface sans contact, il s'agit d'une interface inductive, laquelle comprend un élément de connexion côté primaire, et **en ce que** le module capteur comprend un élément de connexion côté secondaire, l'élément de connexion côté primaire et l'élément de connexion côté secondaire pouvant être reliés entre eux par le biais d'un coupleur, et
la transmission des signaux entre l'élément de connexion côté primaire et l'élément de connexion côté secondaire s'effectuant par voie inductive, l'élément de connexion côté primaire comprenant une bobine primaire et l'élément de connexion côté secondaire comprenant une bobine secondaire, et le module capteur étant alimenté en énergie par l'intermédiaire de l'interface inductive.

4. Circuit de câble selon l'une des revendications précédentes, **caractérisé en ce que** le circuit de câble comprend un amplificateur de classe E, qui génère un signal haute fréquence pour la transmission des signaux entre le circuit de câble et le module capteur.

5. Circuit de câble selon la revendication 4, **caractérisé en ce que** l'unité de traitement de signaux délivre un signal de commande pour l'amplificateur de classe E, le signal haute fréquence généré par l'amplificateur de classe E étant modulé en fonction du signal de commande et le signal de commande pour l'amplificateur de classe E étant conçu de telle sorte à superposer par modulation les données transmises au signal haute fréquence.

6. Circuit de câble selon l'une des revendications précédentes, **caractérisé en ce que** l'unité de traitement des signaux met à disposition une structure d'index, par l'intermédiaire de laquelle les paramètres spécifiques du circuit de câble peuvent être adressés à partir du transmetteur.

7. Circuit de câble selon l'une des revendications précédentes, **caractérisé en ce que** l'unité de traitement des signaux met à disposition une structure d'index, par l'intermédiaire de laquelle peuvent être réalisés les accès en écriture et/ou en lecture à des paramètres spécifiques du circuit de câble, à partir du transmetteur.

8. Circuit de câble selon l'une des revendications précédentes, **caractérisé en ce que** le circuit de câble comprend une ou plusieurs cellules mémoire, dans lesquelles des paramètres spécifiques du circuit de câble sont enregistrés, les paramètres spécifiques pouvant être adressés, indépendamment du module capteur, à partir du transmetteur via une structure d'index séparée.

9. Circuit de câble selon l'une des revendications précédentes, **caractérisé en ce que** l'unité de traitement des signaux est conçue de telle sorte à transmettre un message pour le module capteur aux télégrammes à transmettre du transmetteur au module capteur, l'unité de traitement des signaux écrivant les bits de transmission inutilisés du télégramme.

10. Circuit de câble selon l'une des revendications précédentes, **caractérisé en ce que** l'unité de traitement des signaux est conçue de telle sorte à transmettre l'un des messages suivants aux télégrammes à transmettre du transmetteur au module capteur :
- une interrogation sur les méthodes de codage avantageuses prises en charge par le module capteur
- une demande de passage de la méthode de codage actuellement utilisée à une méthode de codage avantageuse.

11. Circuit de câble selon l'une des revendications précédentes, **caractérisé en ce que** le module capteur est conçu de telle sorte à transmettre un message pour le circuit de câble aux télégrammes à transmettre du module capteur au transmetteur, les bits inutilisés du télégramme étant écrits.

12. Circuit de câble selon l'une des revendications précédentes, **caractérisé en ce que** le module capteur est conçu de telle sorte à transmettre un message pour le circuit de câble aux télégrammes à transmettre du module capteur au transmetteur :
- une réponse quant aux méthodes de codage les plus avantageuses qui sont prises en charge par le module capteur.

13. Circuit de câble selon l'une des revendications précédentes, **caractérisé en ce que** l'unité de traitement des signaux est conçue de telle sorte à évaluer des bits de transmission spécifiques des télégrammes transmis du module capteur au transmetteur, afin de déterminer quelles sont les méthodes de codage prises en charge par le module capteur et, pour le cas où aussi bien le circuit de câble et le module capteur prennent en charge d'autres méthodes de codage avantageuses, la transmission de données entre le circuit de câble et le module capteur est commutée sur une méthode de codage avantageuse, tandis que pour la transmission de données entre le transmetteur et le circuit de câble, la méthode de codage utilisée de façon standard continue d'être utilisée.

14. Système destiné à la transmission des données de mesure, lequel système comporte :
- un circuit de câble (3) selon l'une des revendication 1 à 13,
- un transmetteur (5), lequel est relié via un câble (4) avec l'interface de câble (13) du circuit de câble (3),
- un module capteur (1, qui échange des données avec le circuit de câble (3) via l'interface sans contact (2).
